# EUROPÄISCHE PATENTSCHRIFT

(11) **EP 2 048 404 B1**
(45) Veröffentlichungstag und Bekanntmachung des Hinweises auf die Patenterteilung: **07.07.2010**
(21) Anmeldenummer: 08013644.3
(22) Anmeldetag: 30.07.2008
(51) Int. Cl.: F16D 65/12

(54) **Bremsscheibe für eine Scheibenbremse**
Brake disc for a disc brake
Disque de frein pour un frein à disque

(30) Priorität: 10.10.2007 DE 102007048648
(43) Veröffentlichungstag der Anmeldung: 15.04.2009
(73) Patentinhaber: Audi AG, 85045 Ingolstadt (DE)
(72) Erfinder: Waninger, Robert, 85055 Ingolstadt (DE); Förster, Kilian, 92345 Hainsberg (DE)
(74) Vertreter: Asch, Konrad

(56) Entgegenhaltungen:
- DD-A1- 137 910
- DE-A1-102005 060 440
- DE-B3- 10 234 104
- US-A- 2 753 959
- US-A- 4 273 218

## Beschreibung

Die Erfindung betrifft eine Bremsscheibe für eine Scheibenbremse, insbesondere für Kraftfahrzeuge, gemäß dem Oberbegriff des Patentanspruches 1.

Eine Scheibenbremse der gattungsgemäße Art beschreibt beispielsweise die DE 198 59 840 B4. Dabei ist die ringförmige Reibscheibe aus einem faserverstärktem Keramik-Metall-Verbundwerkstoff und der flanschförmige Scheibentopf aus z. B. V2A-Stahl oder anodisiertem Aluminium hergestellt. Zur Erzielung verbesserter Dämpfungseigenschaften und zum Ausgleich werkstoffbedingter, unterschiedlicher Wärmedehnungen ist die Reibscheibe "schwimmend" mit dem Scheibentopf verbunden. Dies wird erzielt durch in die Aufnahmebohrungen der Befestigungselemente (Schrauben, Nieten, etc.) eingesteckte Hülsen, die mittels axial wirkender Scheibensicherungselemente gehalten sind.

Aus der DE 102 34 104 B3 ist bereits eine Bremsscheibe bekannt, die einen Reibring und ein Halteteil aufweist, die durch einen sogenannten Verbindungsring miteinander in Verbindung stehen. Der Verbindungsring weist an seinem äußeren Umfangsbereich Biegebalken auf, die formschlüssig in den Reibring eingreifen und somit eine radiale Wärmeausdehnung kompensieren sollen.

Aufgabe der Erfindung ist es, eine Scheibenbremse vorzuschlagen, die bei Herstellung einer robusten und dauerhaften Verbindung von Reibscheibe und Scheibentopf in noch größerem Maße Wärmedehnungs-unterschiede ausgleicht und unzulässige Werkstoffspannungen ausschließt.

Diese Aufgabe wird erfindungsgemäß mit den Merkmalen des Patentanspruches 1 gelöst. Vorteilhafte Weiterbildungen der Erfindung beschreiben die Unteransprüche.

Erfindungsgemäß wird vorgeschlagen, dass in dem Scheibentopf jeweils im Bereich der Befestigungsmittel wenigstens ein, bevorzugt mehrere, ein definiertes Spaltmaß aufweisende Freischnitte vorgesehen sind, die eine zumindest radiale Nachgiebigkeit zwischen Scheibentopf und Befestigungsmittel bzw. Reibscheibe herstellen wobei der wenigstens eine Freischnitt um eine Befestigungsbohrung im Befestigungsflansch des Scheibentopfes herumgeführt ist. Über die wobei der wenigstens eine Freischnitt um eine Befestigungsbohrung im Befestigungsflansch des Scheibentopfes herumgeführt ist eingearbeiteten Freischnitte gelingt es, die Reibscheibe zuverlässig und fest an den Scheibentopf anzubinden und trotzdem die insbesondere im Bereich um die Befestigungsbohrungen herum kritischen unterschiedlichen Wärmedehnungen auszugleichen. Dies wird insbesondere in Verbindung mit radial und/oder tangential verlaufenden Freischnitten erreicht.

In bevorzugter Weiterbildung der Erfindung können durch die Freischnitte zungenförmige, in Umfangsrichtung des Scheibentopfes verlaufende Abschnitte geschaffen sein, die bei in Umfangsrichtung spielfreier, absolut formschlüssig wirkender Momentenübertragung den erforderlichen, radialen Dehnungsausgleich schaffen. Die Freischnitte können zudem so angeordnet sein, dass die zungenförmigen Abschnitte bei regulären Bremsmomenten (Vorwärtsfahrt des Kraftfahrzeuges) auf Zug beansprucht sind.

Des weiteren kann der Übergang der zungenförmigen Abschnitte in den ringförmigen Befestigungsflansch des Scheibentopfes jeweils durch querschnittsverminderte, begrenzt elastische Bereiche gebildet sein, die scharnierartig den Dehnungsausgleich ohne übermäßige Materialbeanspruchung bzw. plastischer Verformung ermöglichen. Ferner können die Freischnitte jeweils um die Befestigungsbohrungen im Befestigungsflansch des Scheibentopfes herumgeführt sein, wobei die dadurch gebildeten, zungenförmigen Abschnitte sich z. B. dem querschnittsverminderten Bereich zu verjüngen.

Zusätzlich können die eingearbeiteten Freischnitte an ihrem radial/tangentialen Übergang verrundet und/oder dem querschnittsvermindertem Bereich zu wellenförmig ausgeführt sein und somit ebenfalls zu einer günstigen Spannungsverteilung bei hohen, auftretenden Temperaturunterschieden beitragen.

Desweiteren kann in fertigungstechnisch günstiger Weise der querschnittsverminderte Bereich zusätzlich oder alternativ durch jeweils in den Außenumfang des Befestigungsflansches eingearbeitete Vertiefungen gebildet sein.

In vorteilhafter Weiterbildung der Erfindung können in die Freischnitte zumindest im Bereich der Befestigungsmittel Klammern eingesetzt sein, deren Dicke zumindest abschnittsweise definiert kleiner als die Spaltmaße der Freischnitte sind. Damit gelingt es, bei vermindertem fertigungstechnischen Aufwand extrem geringe Spaltmaße in den Freischnitten herzustellen, die bei definierten Temperaturverhältnissen und/oder Bremsbelastungen die Spaltmaße gegen 0 gehen lassen und somit eine erhöhte innere Festigkeit der Bremsscheibe schaffen.

Die Klammern können ferner durch deren Formgebung und/oder durch die Formgebung der Freischnitte federnd nachgiebig an den Wänden der Freischnitte anliegen, so dass neben dem Dehnungsausgleich eine noch verbesserte innere Dämpfung an der Bremsscheibe erzielt wird.

Zur besonders einfachen Lagesicherung können die Klammern L-förmig oder U-förmig derart ausgeführt sein, dass deren in einer Rotationsebene der Bremsscheibe liegende, seitliche Abschnitte von den Befestigungsmitteln durchgriffen sind.

Die Befestigungsmittel können zudem bevorzugt Schraubverbindungen sein, deren Schrauben durchmessergrößere Abschnitte aufweisen, die den Befestigungsflansch und ggf. die seitlichen Abschnitte der Klammern durchdringen und die über einen durchmesserkleineren Abschnitt mit der Reibscheibe fest verschraubt sind. Zur Befestigung bzw. als Befestigungsmittel können aber auch alle anderen üblichen Befestigungsmöglichkeiten herangezogen werden, so z. B. Nietverbindungen, Krimpungen, Klemm- oder Quetschverbindungen und dergleichen.

Eine im wesentlichen radialkraftfreie Einleitung von Bremsmomenten von der Reibscheibe in den Scheibentopf wird erzielt, indem der querschnittsverminderte Bereich der zungenförmigen Abschnitte so ausgeführt ist, dass er jeweils in einer durch die Mitte der Befestigungsmittel gelegten Tangente des Befestigungsflansches des Scheibentopfes liegt.

Die wirksamen Spaltmaße der Freischnitte (mit oder ohne Klammern) betragen bevorzugt im radialen Abschnitt und/oder im axialen Abschnitt gleich/kleiner 0,5 mm, um in zuverlässiger Weise die auftretenden Wärmedehnungsunterschiede ausgleichen zu können.

Schließlich kann an den radial verlaufenden Befestigungsflansch des Scheibentopfes ein zumindest teilweise die Reibscheibe durchgreifender, axial verlaufender Ringbund angeformt sein. Dieser stellt eine vorteilhafte Aussteifung des Befestigungsflansches des Scheibentopfes sicher und kann ferner bei entsprechender Ausgestaltung als eine Wasserfangleiste und/oder eine Staubpartikel abweisende Abdeckung bei rauen Betriebsbedingungen des Kraftfahrzeuges sein.

Zur weiteren Erläuterung der Erfindung wird im Folgenden auf die Figuren der Zeichnung Bezug genommen. Es zeigen:
- Fig. 1: in raumbildlicher Darstellung eine Bremsscheibe für Scheibenbremsen von Kraftfahrzeugen, mit einer innenbelüfteten Reibscheibe und einem Scheibentopf, die über Befestigungsmittel miteinander verbunden sind, sowie mit wärmedehnungsausgleichenden Freischnitten im Scheibentopf,
- Fig. 2: eine teilweise Seitenansicht gemäß Pfeil X der Fig. 1 der Bremsscheibe,
- Fig. 3: einen Querschnitt eines Befestigungsabschnittes zwischen Reibscheibe und Scheibentopf der Bremsscheibe nach den Fig. 1 und 2, entlang der Linie III - III der Fig. 4,
- Fig. 4: einen tangentialen Schnitt gemäß Linie IV - IV der Fig. 3 durch den Befestigungsabschnitt,
- Fig. 5: eine zu den Fig. 3 und 4 alternative Ausbildung eines Befestigungsabschnittes zwischen Reibscheibe und Scheibentopf, mit einer in den Frei-schnitten eingesetzten, federnd wirkenden Klammer,
- Fig. 6: eine weitere, zu den Fig. 3 bis 5 alternative Ausbildung eines Befestigungsabschnittes zwischen Reibscheibe und Scheibentopf, mit einer in den radialen Freischnitt eingesetzten Spannhülse,
- Fig. 7: eine zur Fig. 4 alternative Ausbildung der Befestigungsschraube zwischen Reibscheibe und Scheibentopf, mit einem im Durchmesser abgestuften Schraubenschaft,
- Fig. 8: einen Schnitt entlang der Linie VIII - VIII der Fig. 1 durch die Reibscheibe und den Scheibentopf der Bremsscheibe, und
- Fig. 9: eine schematische Perspektivdarstellung gemäß Fig. 3.

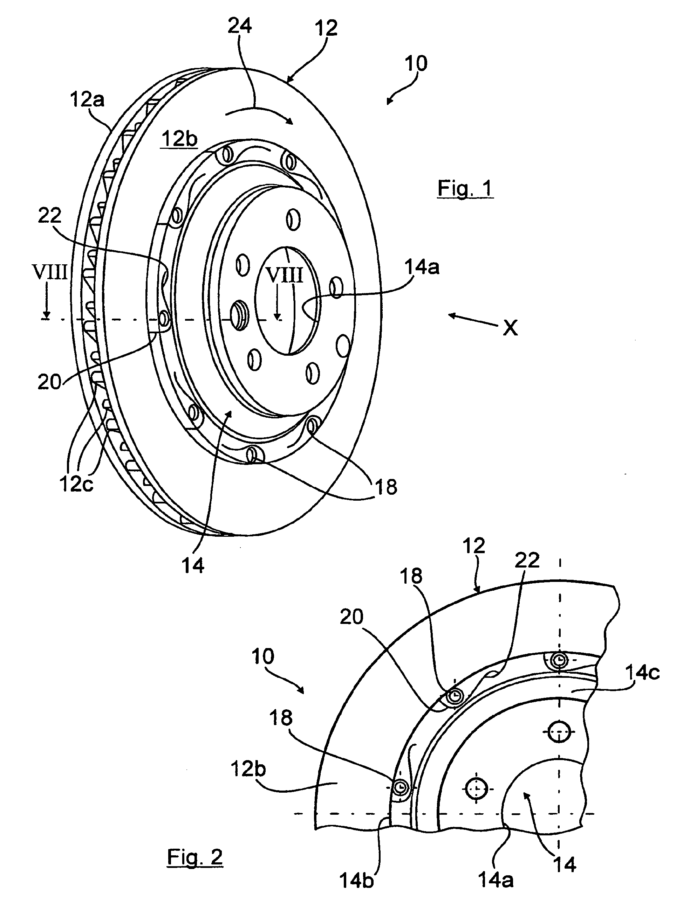

In den Fig. 1 und 2 ist eine Bremsscheibe 10 für eine soweit nicht beschrieben herkömmliche Scheibenbremse für Kraftfahrzeuge dargestellt, die sich im Wesentlichen aus einer ringförmigen Reibscheibe 12 aus z.B. C/SiC (Verbundkeramik) und einem Scheibentopf 14 aus z. B. Stahl oder Leichtmetall zusammensetzt.

Die Reibscheibe 12 ist innenbelüftet mit zwei zueinander axial beabstandeten Reibringen 12a, 12b und dazwischen liegenden Verbindungsstegen 12c ausgeführt, wobei zwischen den Verbindungsstegen 12c in bekannter Weise radial verlaufende Kühlkanäle gebildet sind.

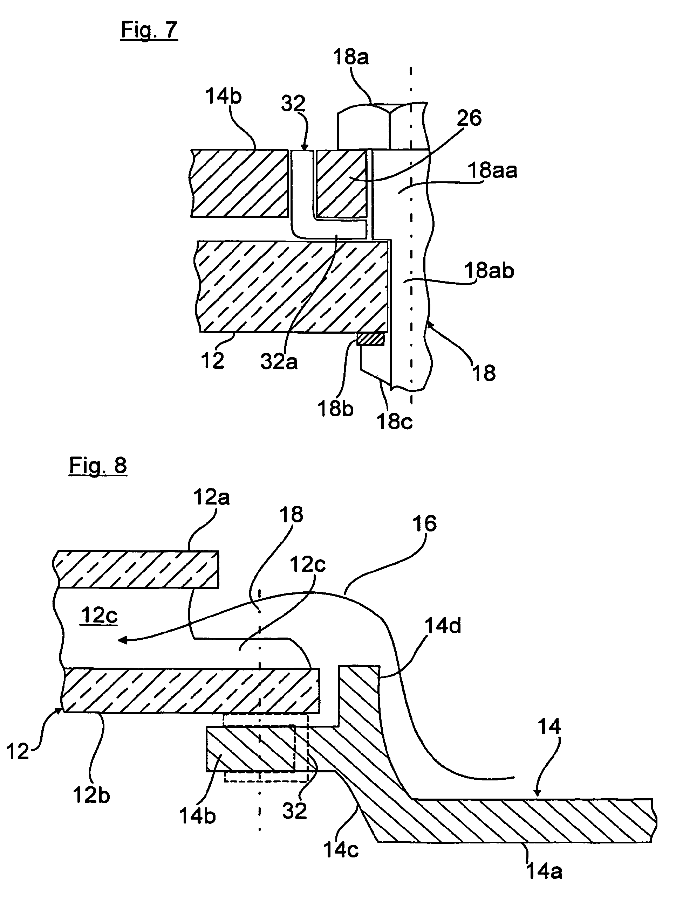

Der einstückig ausgeführte Scheibentopf 14 weist einen Radflansch 14a zur Befestigung der Bremsscheibe 10 an einem nicht dargestellten Aufnahmeflansch einer Radlagerung des Kraftfahrzeuges, einen ebenfalls radial ausgerichteten Befestigungsflansch 14b (vgl. auch **Fig. 8**) und einen im Wesentlichen axial verlaufenden Verbindungsabschnitt 14c auf. Der Verbindungsabschnitt 14c könnte ggf. eine Reibfläche für eine in den Scheibentopf 14 integrierte Trommelbremse (Feststellbremse) bilden.

Gemäß **Fig. 8** ist an den Scheibentopf 14 anschließend an den Befestigungsflansch 14b ein axial verlaufender Ringbund 14d angeformt, der sich über den dem Befestigungsflansch 14b unmittelbar benachbarten Reibring 12b der Reib-scheibe 12 hinaus bis etwa zu den durch die Verbindungsstege 12c definierten Kühlkanälen erstreckt. Der Ringbund 14d bildet eine zusätzliche Aussteifung des Scheibentopfes 14 und dessen Befestigungsflansches 14b und leitet ggf. im Fahrbetrieb radial nach außen geführtes Wasser oder Staubpartikel wie mit dem eingezeichneten Pfeil 16 angedeutet in die Kühlkanäle der Reibscheibe 12 ab.

Die Reibscheibe 12 bzw. deren Reibscheibe 12b mit verlängerten Verbindungsstegen 12c ist mit dem Befestigungsflansch 14b des Scheibentopfes 14 über mehrere, umfangsverteilte Schraubverbindungen 18 fest verbunden.

Ferner sind im Bereich der Schraubverbindungen 18 in den Befestigungsflansch 14b Freischnitte eingearbeitet (**Fig. 1 und 2**), die sich jeweils aus einem radial verlaufenden Freischnitt 20 und einem im wesentlichen tangential verlaufenden Freischnitt 22 mit jeweils einem definierten Spaltmaß zusammensetzen.

Die Freischnitte 20, 22 erstrecken sich wie ersichtlich jeweils um die Befestigungsmittel bzw. die Schraubverbindungen 18 herum und mit ihrem tangentialen Abschnitt 22 in Richtung der mit dem Pfeil 24 eingezeichneten, regulären Drehrichtung (Vorwärtsfahrt des Kraftfahrzeuges) der Scheibenbremse 10.

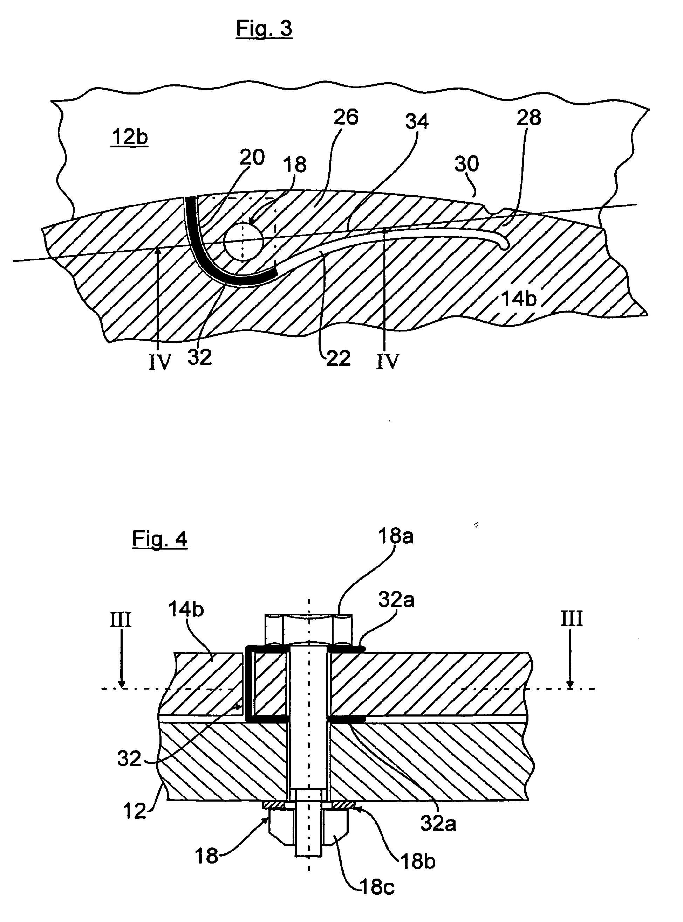

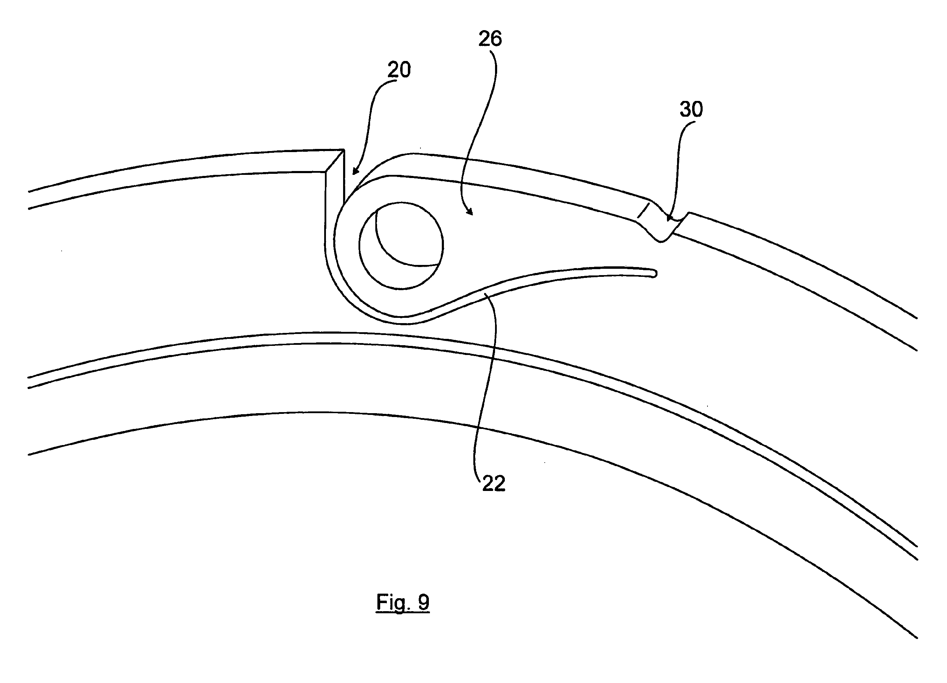

Die **Fig. 3, 4** **und** **9** zeigen die Freischnitte 20, 22 des Befestigungsflansches 14b im Detail.

Wie ersichtlich ist, sind durch die Freischnitte 20, 22 am Außenumfang des Befestigungsflansches 14b jeweils im Bereich der Schraubverbindungen 18 und in Drehrichtung 24 weisend zungenförmige Abschnitte 26 gebildet, die an deren Übergang in den Befestigungsflansch 12b bei 28 querschnittsvermindert ausgeführt sind und deshalb einen begrenzt elastischen, scharnierartigen Bereich 28 bilden.

Die Querschnittsverminderung ist einerseits erreicht, indem die etwa tangential zum Befestigungsflansch 14b verlaufenden Freischnitte 22 mit einer radial nach außen verlaufenden Komponente ausgeführt sind, die die Abschnitte 26 entsprechend verjüngen, und indem andererseits am Außenumfang des Befestigungsflansches 14b jeweils im Bereich der Übergänge 28 Vertiefungen 30 (**Fig. 3**) eingearbeitet sind.

Ferner sind die Übergänge von den Freischnitten 20 zu den Freischnitten 22 wie ersichtlich verrundet ausgeführt; die tangential verlaufenden Freischnitte 22 sind zudem wellenförmig gestaltet, um eine definierte Nachgiebigkeit des zungenförmigen Abschnittes 26 in Tangentialrichtung (Zugrichtung) einzustellen.

Die Querschnittsverminderung bzw. der Bereich 28 ist des weiteren so angeordnet, dass eine durch die Mitte der Schraubverbindung 18 gelegte Tangente 34 im wesentlichen durch den Bereich 28 verläuft, um bei hohen Bremsmomenten an der Reibscheibe 12 im wesentlichen nur tangential wirkende Zugkräfte abzustützen.

In die durch die Freischnitte 20, 22 gebildeten Schlitze des Befestigungsflansches 14b sind durch Stahlbleche gebildete Klammern 32 eingesetzt, deren Dicke kleiner als das Spaltmaß der Freischnitte 20, 22 ist. Die Differenz zwischen Spaltmaßen und Dicke bildet somit das wirksame Spaltmaß, das bevorzugt < 0,5 mm beträgt. Dabei ist ferner das wirksame Spaltmaß des radial wirkenden Freischnittes 22 größer als das Spaltmaß des tangential ausgleichenden Freischnittes 20. Das Spaltmaß kann dabei so gering ausgelegt sein, dass bei hohen Tangentialkräften das Spaltmaß in den Freischnitten 20 gegen 0 geht.

Die in die Freischnitte 20, 22 eingesetzten Klammern 32 erstrecken sich nur über einen Teil der Länge des tangential verlaufenden Freischnittes 22.

Ferner sind die Klammern 32 U-förmig ausgeführt, mit in Umfangsrichtung des Befestigungsflansches 14b angeformten, seitlichen Abschnitten 32a, die sich über die Schraubverbindungen 18 hinauserstrecken und Bohrungen (ohne Bezugszeichen) aufweisen, die mit den Bohrungen in dem Befestigungsflansch 14b und in der Reibscheibe 12 in einer Flucht liegen.

Die Schraubverbindungen 18 (vgl. **Fig. 4**) weisen jeweils eine die Klammern 32 bzw. deren Abschnitte 32a, den Befestigungsflansch 14b und die Reibscheibe 12 durchdringende Schraube 18a, eine Druckscheibe 18b und eine Schraubenmutter 18c auf.

Die Freischnitte 20, 22 stellen sicher, dass selbst bei großen Temperaturänderungen an der Scheibenbremse 10 werkstoffbedingte, unterschiedliche Wärmedehnungen insbesondere in radialer Richtung zwischen der Reibscheibe 12 und dem Scheibentopf 14 bzw. dessen Befestigungsflansch 14b ausgeglichen werden können. Der Befestigungsflansch 14b mit dem größeren Ausdehnungskoeffizienten kann sich "aufweiten", wobei sich die Freischnitte 20, 22 entsprechend verkleinern, während die Reibscheibe 12 zusammen mit den zungenförmigen Abschnitten 26 und den Schraubverbindungen 18 eine entsprechend geringere Ausdehnung unter Vermeidung schädlicher Werkstoffspannungen erfahren kann.

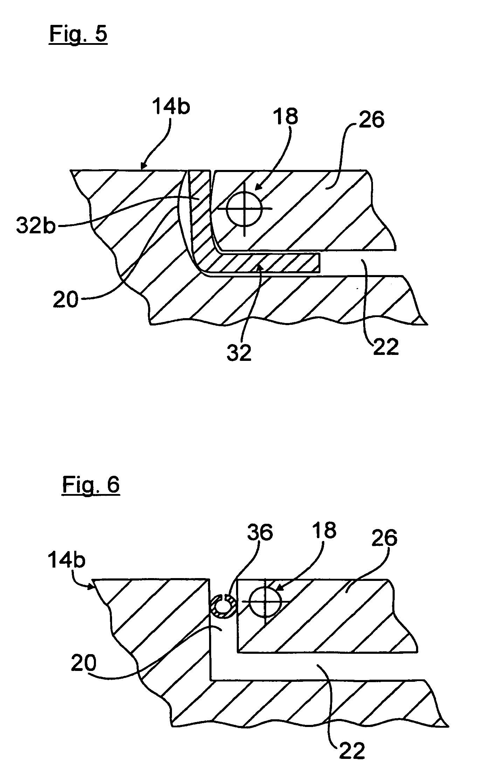

Die **Fig. 5 bis 7** beschreiben alternative Ausgestaltungen der Erfindung, die nur soweit beschrieben sind, als sie sich wesentlich von den vorstehenden Ausführungen unterscheiden. Funktionell gleiche Teile sind mit gleichen Bezugszeichen versehen.

Gemäß **Fig. 5** sind die radial verlaufenden Freischnitte 20 im Querschnitt gesehen wie ersichtlich gekrümmt ausgeführt, während die eingesetzten Klammern 32 im wesentlichen geradlinig ausgeführte Schenkel aufweist. Durch diese Formgebung liegt der Schenkel 32b der Klammern 32 spielfrei, aber federnd nachgiebig an den gekrümmten Wänden der Freischnitte 20 an und ergibt eine verbesserte, innere Dämpfung der Bremsscheibe 10. Anstelle des gekrümmten Verlaufes der Freischnitte 20 könnten auch die Klammern 32 zur Erzielung einer federnden Nachgiebigkeit entsprechend gekrümmt ausgebildet sein.

In der Fig. 6 sind anstelle der bandförmigen Klammern 32 gemäß den Fig. 1 bis 5 in den radial verlaufenden Freischnitt 20 jeweils ein etwa C-förmiger, hohler Spannstift 36 aus Stahl eingesetzt, dessen Spaltöffnung zum Freischnitt 20 hin gerichtet ist und der durch eingearbeitete Vertiefungen formschlüssig in den Freischnitten 20 gehalten ist. Der Spannstift 36 ergibt ebenfalls eine Dämpfungswirkung an der Bremsscheibe 10. Die tangentialen Freischnitte 22 hingegen sind ohne dazwischen eingesetzte Klammern auf ein gewünschtes Spaltmaß bearbeitet.

Die **Fig. 7** schließlich zeigt eine alternative Schraubverbindung 18 zwischen der Reibscheibe 12 und dem Befestigungsflansch 14b des Scheibentopfes 14 der Bremsscheibe 10.

Dabei ist die Schraube 18a gestuft mit einem im Durchmesser größeren Schaftabschnitt 18aa versehen, der entsprechend angepasste Bohrungen in dem Befestigungsflansch 14b und einem seitlichen Abschnitt 32a der L-förmigen Klammern 32 durchsetzt. Der im Durchmesser kleinere Schaftabschnitt 18ab der Schraube 18 durchdringt die ebenfalls kleinere Bohrung im Reibring 12 und ist mit diesem über die Druckscheibe 18b und die Schraubenmutter 18c fest verschraubt. Der im Durchmesser größere Schaftabschnitt 18aa stützt sich unter Vorgabe einer definierten, unterhalb des Anzugsmomentes der Schraubverbindung 18 liegenden Vorspannung des Befestigungsflansches 14b und der Klammer 32 an dem Reibring 12 ab.

Der durch die Freischnitte 20, 22 bereitgestellte Dehnungsausgleich kann nur durch Freischnitte 20, 22 oder zusätzlich durch zumindest teilweise eingesetzte Klammern 32 oder Spannstifte 36 hergestellt werden. Anstelle der Schraubverbindungen 18 können auch andere Verbindungsmittel, z. B. Nieten oder Bolzenverbindungen verwendet sein.

## Patentansprüche

1. Bremsscheibe für eine Scheibenbremse, insbesondere für Kraftfahrzeuge, mit zumindest einer radial äußeren, ringförmigen Reibscheibe (12) und einem inneren, flanschförmigen Scheibentopf (14), der über umfangsverteilte Befestigungsmittel mit der Reibscheibe (12) verbunden ist, sowie mit Mitteln zum Ausgleich unterschiedlicher Wärmedehnungen von Reibscheibe (12) und Scheibentopf (14), wobei in dem Scheibentopf (14) wenigstens ein im Bereich der Befestigungsmittel (18) ein definiertes Spaltmaß aufweisender Freischnitt (20, 22) vorgesehen ist, der im freigeschnittenen Abschnitt (26) eine zumindest radiale Nachgiebigkeit zwischen Scheibentopf (14) und Befestigungsmittel (18)und/oder Reibscheibe (12) herstellt, **dadurch gekennzeichnet, dass** der wenigstens eine Freischnitt (20, 22) um eine Befestigungsbohrung im Befestigungsflansch (14b) des Scheibentopfes (14) herumgeführt ist.

2. Bremsscheibe nach Anspruch 1, **dadurch gekennzeichnet, dass** der Freischnitt (20, 22) im Bereich der Befestigungsmittel (18) tangential und/oder radial verläuft.

3. Bremsscheibe nach Anspruch 1 oder 2, **dadurch gekennzeichnet, dass** mehrere voneinander in Umfangsrichtung beabstandete Freischnitte (20, 22) vorgesehen sind, die zungenförmige, in Umfangsrichtung des Scheibentopfes (14) verlaufende Abschnitte (26) ausbilden.

4. Bremsscheibe nach einem der Ansprüche 1 bis 3, **dadurch gekennzeichnet, dass** der wenigstens eine Freischnitt (20, 22) so angeordnet ist, dass der freigeschnittene, insbesondere zungenförmige Abschnitt (26) bei regulären Bremsmomenten auf Zug beansprucht ist.

5. Bremsscheibe nach einem der Ansprüche 1 bis 4, **dadurch gekennzeichnet, dass** der einen Anbindungsbereich (28) ausbildende Übergang des bevorzugt zungenförmigen Abschnitts (26) in den ringförmigen Befestigungsflansch (14b) durch einen querschnittsverminderten Bereich und/oder eine in den Außenumfang eingearbeitete nutartige Vertiefung (30) gebildet ist, insbesondere unter Ausbildung einer im Wesentlichen elastischen Anbindung.

6. Bremsscheibe nach Anspruch 5, **dadurch gekennzeichnet, dass** der wenigstens eine freigeschnittene, insbesondere zungenförmige Abschnitt (26) in Richtung auf den Anbindungsbereich (28) zu wellenförmig ausgebildet ist.

7. Bremsscheibe nach Anspruch 5 oder 6, **dadurch gekennzeichnet, dass** der Anbindungsbereich (28) des freigeschnittenen, bevorzugt zungenförmigen Abschnitts (26) so ausgeführt ist, dass eine den Schubmittelpunkt einer tangentialen Momentlast darstellende Tangente (34) als eine durch die Mitte des Befestigungsmittels (18) verlaufende Tangente (34) des Befestigungsflansches (14b) des Scheibentopfes (14) ausgebildet ist.

8. Bremsscheibe nach einem der Ansprüche 1 bis 7, **dadurch gekennzeichnet, dass** die eingearbeiteten Freischnitte (20, 22) an ihrem radialen/tangentialen Übergang verrundet sind.

9. Bremsscheibe nach einem der Ansprüche 1 bis 8, **dadurch gekennzeichnet, dass** in den Freischnitt (20, 22) zumindest im Bereich der Befestigungsmittel (18) eine Klammer (32) eingesetzt ist, deren Materialstärke zumindest abschnittsweise kleiner als das Spaltmaß des Freischnitts (20, 22) in diesem Bereich ist.

10. Bremsscheibe nach Anspruch 9, **dadurch gekennzeichnet, dass** die Klammer (32) durch deren Formgebung und/oder die Formgebung des zugeordneten Freischnitts (20, 22) federnd nachgiebig an den Wänden des Freischnitts (20, 22) anliegt.

11. Bremsscheibe nach Anspruch 9 oder 10, **dadurch gekennzeichnet, dass** die Klammer (32) L-förmig oder U-förmig derart ausgeführt ist, dass deren wenigstens einer in einer Rotationsebene der Bremsscheibe (10) liegender, seitlicher Abschnitte (32a) von dem zugeordneten Befestigungsmittel (18) durchgriffen ist.

12. Bremsscheibe nach einem der Ansprüche 9 bis 11, **dadurch gekennzeichnet, dass** das wirksame Spaltmaß des wenigstens einen Freischnitts (20, 22) mit oder ohne Klammer (32) gleich oder kleiner 0,5 mm ist.

13. Bremsscheibe nach einem der Ansprüche 1 bis 12, **dadurch gekennzeichnet, dass** die Befestigungsmittel durch Schraubverbindungen und/oder Nietverbindungen und/oder Krimpungen und/oder Klemm- oder Quetschverbindungen gebildet sind.

14. Bremsscheibe nach Anspruch 13, **dadurch gekennzeichnet, dass** die Befestigungsmittel Schraubverbindungen (18) sind, deren Schrauben (18a) durchmessergrößere Abschnitte (18aa) aufweisen, die einen Befestigungsflansch (14b) und ggf. wenigstens einen seitlichen Abschnitt (32a) einer Klammer (32) durchdringen und die über einen durchmesserkleineren Abschnitt (18ab) mit der Reibscheibe (12) fest verschraubt sind.

15. Bremsscheibe nach einem der Ansprüche 1 bis 14, **dadurch gekennzeichnet, dass** in den Freischnitt (20, 22) ein Federelement, insbesondere ein federnd nachgiebiger, hohler Spannstift (36), eingesetzt ist.

16. Bremsscheibe nach einem der Ansprüche 1 bis 15, **dadurch gekennzeichnet, dass** an den radial verlaufenden Befestigungsflansch (14b) des Scheibentopfes (14) ein zumindest teilweise innerhalb der Reibscheibe (12) liegender, axial verlaufender Ringbund (14d) angeformt ist.

## Claims

1. Brake disc for a disc brake, in particular for motor vehicles, having at least one radially outer, annular friction disc (12) and an inner, flange-shaped disc pot (14) which is connected to the friction disc (12) via circumferentially distributed fastening means, and having means for compensating different thermal expansions of friction disc (12) and disc pot (14), at least one cut-out (20, 22) being provided in the disc pot (14), which at least one cut-out (20, 22) has a defined gap width in the region of the fastening means (18) and, in the cut-out section (26) produces an at least radial compliance between the disc pot (14) and the fastening means (18) and/or the friction disc (12), **characterized in that** the at least one cut-out (20, 22) is guided around a fastening hole in the fastening flange (14b) of the disc pot (14).

2. Brake disc according to Claim 1, **characterized in that** the cut-out (20, 22) extends tangentially and/or radially in the region of the fastening means (18).

3. Brake disc according to Claim 1 or 2, **characterized in that** a plurality of cut-outs (20, 22) are provided which are spaced apart from one another in the circumferential direction and form tongue-shaped sections (26) which extend in the circumferential direction of the disc pot (14).

4. Brake disc according to one of Claims 1 to 3, **characterized in that** the at least one cut-out (20, 22) is arranged in such a way that the cut-out, in particular tongue-shaped section (26) is subjected to a tensile load in the case of regular braking moments.

5. Brake disc according to one of Claims 1 to 4, **characterized in that** the transition of the preferably tongue-shaped section (26) into the annular fastening flange (14b), which transition forms a connecting region (28), is formed by a region of reduced cross section and/or a groove-like depression (30) which is machined into the outer circumference, in particular with the formation of a substantially elastic connection.

6. Brake disc according to Claim 5, **characterized in that** the at least one cut-out, in particular tongue-shaped section (26) is of undulating configuration in the direction of the connecting region (28).

7. Brake disc according to Claim 5 or 6, **characterized in that** the connecting region (28) of the cut-out, preferably tongue-shaped section (26) is configured in such a way that a tangent (34) which represents the shear centre of a tangential moment load is configured as a tangent (34) of the fastening flange (14b) of the disc pot (14), which tangent (34) extends through the centre of the fastening means (18).

8. Brake disc according to one of Claims 1 to 7, **characterized in that** the machined cut-outs (20, 22) are rounded at their radial/tangential transition.

9. Brake disc according to one of Claims 1 to 8, **characterized in that** a clamp (32) is inserted into the cut-out (20, 22) at least in the region of the fastening means (18), the material thickness of which clamp (32) is smaller at least in sections than the gap width of the cut-out (20, 22) in this region.

10. Brake disc according to Claim 9, **characterized in that**, as a result of its design and/or the design of the associated cut-out (20, 22), the clamp (32) bears resiliently in a sprung manner against the walls of the cut-out (20, 22).

11. Brake disc according to Claim 9 or 10, **characterized in that** the clamp (32) is of L-shaped or U-shaped configuration in such a way that its at least one lateral section (32a) which lies in a rotational plane of the brake disc (10) is penetrated by the associated fastening means (18).

12. Brake disc according to one of Claims 9 to 11, **characterized in that** the effective gap width of the at least one cut-out (20, 22) with or without clamp (32) is less than or equal to 0.5 mm.

13. Brake disc according to one of Claims 1 to 12, **characterized in that** the fastening means are formed by screw connections and/or rivet fastenings and/or crimped connections and/or clamping or crimping connections.

14. Brake disc according to Claim 13, **characterized in that** the fastening means are screw connections (18), the screws (18a) of which have sections (18aa) of greater diameter which penetrate a fastening flange (14b) and optionally at least one lateral section (32a) of a clamp (32) and which are screwed fixedly to the friction disc (12) via a section (18ab) of smaller diameter.

15. Brake disc according to one of Claims 1 to 14, **characterized in that** a spring element, in particular a hollow clamping pin (36) which is resilient in a sprung manner, is inserted into the cut-out (20, 22).

16. Brake disc according to one of Claims 1 to 15, **characterized in that** an axially extending annular collar (14d) which lies at least partially within the friction disc (12) is formed integrally onto the radially extending fastening flange (14b) of the disc pot (14).

## Revendications

1. Disque de frein pour un frein à disque, notamment pour véhicules automobiles, comprenant au moins un disque de friction (12) de forme annulaire, radialement externe, et une nacelle de disque (14) interne, en forme de bride, qui est connectée par le biais de moyens de fixation répartis sur la périphérie au disque de friction (12), et comprenant aussi des moyens pour compenser différentes dilatations thermiques du disque de friction (12) et de la nacelle de disque (14), au moins une découpe (20, 22) présentant une dimension de fente définie étant prévue dans la nacelle de disque (14) dans la région des moyens de fixation (18), laquelle produit dans la portion découpée (26) une flexibilité au moins radiale entre la nacelle de disque (14) et les moyens de fixation (18) et/ou le disque de friction (12), **caractérisé en ce que** l'au moins une découpe (20, 22) est guidée autour d'un alésage de fixation dans la bride de fixation (14b) de la nacelle de disque (14).

2. Disque de frein selon la revendication 1, **caractérisé en ce que** la découpe (20, 22) s'étend tangentiellement et/ou radialement dans la région des moyens de fixation (18).

3. Disque de frein selon la revendication 1 ou 2, **caractérisé en ce que** plusieurs découpes (20, 22) espacées l'une de l'autre dans la direction périphérique sont prévues, lesquelles forment des portions (26) en forme de langues, s'étendant dans la direction périphérique de la nacelle de disque (14).

4. Disque de frein selon l'une quelconque des revendications 1 à 3, **caractérisé en ce que** l'au moins une découpe (20, 22) est disposée de telle sorte que la portion (26) découpée, notamment en forme de langue, soit sollicitée en traction dans le cas de couples de freinage réguliers.

5. Disque de frein selon l'une quelconque des revendications 1 à 4, **caractérisé en ce que** la transition de la portion de préférence en forme de langue (26), constituant une région de liaison (28), à la bride de fixation annulaire (14b) est formée par une région de section transversale réduite et/ou par un renfoncement (30) de type rainure pratiqué dans la périphérie extérieure, notamment en formant une liaison essentiellement élastique.

6. Disque de frein selon la revendication 5, **caractérisé en ce que** l'au moins une portion (26) découpée, notamment en forme de langue, est réalisée sous forme ondulée dans la direction de la région de liaison (28).

7. Disque de frein selon la revendication 5 ou 6, **caractérisé en ce que** la région de liaison (28) de la portion découpée (26) notamment en forme de langue, est réalisée de telle sorte qu'une tangente (34) constituant le centre de poussée d'une charge de couple tangentielle soit réalisée sous forme d'une tangente (34) de la bride de fixation (14b) de la nacelle de disque (14) s'étendant à travers le centre du moyen de fixation (18).

8. Disque de frein selon l'une quelconque des revendications 1 à 7, **caractérisé en ce que** les découpes pratiquées (20, 22) sont arrondies au niveau de leur transition radiale/tangentielle.

9. Disque de frein selon l'une quelconque des revendications 1 à 8, **caractérisé en ce qu'**une pince (32) est insérée dans la découpe (20, 22) au moins dans la région des moyens de fixation (18), son épaisseur de matériau étant en partie plus petite que la dimension de la fente de la découpe (20, 22) dans cette région.

10. Disque de frein selon la revendication 9, **caractérisé en ce que** la pince (32) s'applique par sa forme et/ou par la forme de la découpe associée (20, 22) de manière élastiquement flexible contre les parois de la découpe (20, 22).

11. Disque de frein selon la revendication 9 ou 10, **caractérisé en ce que** la pince (32) est réalisée en forme de L ou en forme de U de telle sorte que son au moins une portion latérale (32a) située dans un plan de révolution du disque de frein (10), soit traversée par le moyen de fixation associé (18).

12. Disque de frein selon l'une quelconque des revendications 9 à 11, **caractérisé en ce que** la dimension de la fente effective de l'au moins une découpe (20, 22) avec ou sans la pince (32) est inférieure ou égale à 0,5 mm.

13. Disque de frein selon l'une quelconque des revendications 1 à 12, **caractérisé en ce que** les moyens de fixation sont formés par des connexions vissées et/ou des connexions rivetées et/ou des sertissages et/ou des connexions par serrage ou écrasement.

14. Disque de frein selon la revendication 13, **caractérisé en ce que** les moyens de fixation sont des connexions vissées (18), dont les vis (18a) présentent des portions de plus grand diamètre (18aa), qui traversent une bride de fixation (14b) et éventuellement au moins une portion latérale (32a) d'une pince (32), et qui sont vissées fixement par le biais d'une portion de plus petit diamètre (18ab) au disque de friction (12).

15. Dispositif de frein selon l'une quelconque des revendications 1 à 14, **caractérisé en ce que** dans la découpe (20, 22) est inséré un élément à ressort, notamment une goupille de serrage (36) creuse, élastiquement flexible.

16. Disque de frein selon l'une quelconque des revendications 1 à 15, **caractérisé en ce que** sur la bride de fixation (14b) s'étendant radialement de la nacelle de disque (14), est façonné un épaulement annulaire (14d) s'étendant axialement, situé au moins en partie à l'intérieur du disque de friction (12).
